Europäisches Patentamt

European Patent Office

Office européen des brevets

(19)

(11) EP 0 959 625 A2

(12) EUROPEAN PATENT APPLICATION

(43) Date of publication:
24.11.1999 Bulletin 1999/47

(51) Int Cl.⁶: H04N 7/26

(21) Application number: 99303941.1

(22) Date of filing: 20.05.1999

(84) Designated Contracting States:
AT BE CH CY DE DK ES FI FR GB GR IE IT LI LU
MC NL PT SE
Designated Extension States:
AL LT LV MK RO SI

(30) Priority: 22.05.1998 US 83561

(71) Applicant: TEKTRONIX, INC.
Wilsonville, Oregon 97070-1000 (US)

(72) Inventors:
• Jasinschi, Radu S.
Hilsboro, Oregon 97124 (US)

• Naveen, Thumpudi
Beaverton, Oregon 97006 (US)
• Tabatabai, Ali
Beaverton, Oregon 97007 (US)
• Babic-Vovk, Paul T.
Los Chorros, Caracas 1071 (VE)

(74) Representative: Molyneaux, Martyn William
Langner Parry
52-54 High Holborn
London WC1V 6RR (GB)

(54) **Segmenting video images based on joint region and contour information**

(57)    Segmenting video sequences based on joint region and contour information uses a motion segmentation algorithm to separate moving objects from background, and then generates a contour around the object. The contour is initially determined binarily using minimization of an energy function having continuity, rigidity and balloon terms to shrink the contour to the separated objects from an initial position, to eliminate sharp corners and to push/pull contour nodes to the boundaries of the object. The resulting binary contour is further refined using a luminance gradient term to take into account the luminance of the image, and using a chrominance gradient term to provide final adjustment of the contour. A shape template for the object is generated from the contour by filling the interior of the contour with a constant value, such as white.

FIG.1

## Description

## BACKGROUND OF THE INVENTION

The present invention relates to video signal processing, and more particularly to the segmenting of video sequences based on joint region and contour information.

The process of segmentation of a video sequence involves separating different objects within an image scene from a relatively static background. An example is the separation of a tennis player (object) from a watching crowd (background) in a video sequence of a tennis match. The problem of segmenting and tracking objects in video sequences is fundamental for content-based approaches to video processing. Once a fully automated object segmentation and tracking technique is developed, truly new types of technology may be created. As a result fully interactive audio-visual systems, such as content-based interactive systems -- games, telepresence, internet applications and the like -- may become a reality.

The segmentation of objects may be achieved in two complementary ways: (a) by region and (b) by contour. An object region is defined as the complement to its boundary (external) contour -- it corresponds to the total object area minus the external contour. For the sake of simplicity the external contour is denoted by "contour" in the discussion below. Region-based object segmentation uses information about how the object's intensity (luminance, chrominance), shading or texture profiles vary internally and/or with respect to neighboring regions. On the other hand contour-based object segmentation uses edge information (spatial intensity, shading or texture gradients) as well as higher order information, such as splines, chain-meshes and the like, to determine the object's boundaries.

Model-based contour fitting, as described in the current state of the art technology, is based on energy-minimization splines controlled by image and external forces that may put them near desired features in an image, such as lines, edges or terminations. An energy functional, which is the same as a cost functional and describes more closely the use of intrinsic physical properties of the contour, is formulated to depend on the image feature that is to be extracted, so that by minimizing it iteratively the contour moves towards and locks to the feature. An image feature -- a contour point displaying high curvature -- describes a prominent point that may be robustly identified and tracked in time. This formulation contains some drawbacks:

    1. The final convergence result is highly dependent upon initial conditions. This is due to the fact that the minima found by the contour algorithm may only be local and may even be distant from the desired feature, which makes it necessary that the contour be initialized at positions near desired features.

    2. There exists no technique that fits the contour to moving features and that may be initialized and processed automatically.

The segmentation of moving objects in video sequences, as described by current techniques, uses thresholded differences of successive registered images. These techniques are brittle to the effects of scene illumination, image noise and image registration. Also these techniques process isolated pairs of successive images instead of integrating the segmentation information in time.

What is desired is a technique that integrates both aspects of object representation, i.e., internal regions and boundaries (contours), to obtain a robust segmentation and an efficient representation of objects so that, when integrated, the region information may be used to fit, track and control contour points and the contour may guide region segmentation.

## BRIEF SUMMARY OF THE INVENTION

Accordingly the present invention provides a technique for segmenting video sequences based on joint region and contour information. The technique includes a motion segmentation module, a binary contour module, a luminance contour module and a chrominance contour module. The motion segmentation module segments objects based on their motion information. The binary contour module fits a contour to a binary image obtained from the motion segmentation module which describes the approximate shape of an independently moving object. The luminance contour module is applied to gray level images from the binary contour module to further refine the contour. Finally the chrominance contour module combines the luminance-based contour from the luminance contour module with chrominance image components to perform a final adjustment of the contour position. An object shape template is generated from the resulting integrated contour. The object shape template for each image may be sent with the video sequence to enable separation of the object from the video sequence in subsequent processing.

The objects, advantages and other novel features of the present invention are apparent from the following detailed description when read in conjunction with the appended claims and attached drawing.

## BRIEF DESCRIPTION OF THE SEVERAL VIEWS OF THE DRAWING

Fig. 1 is a flow chart view of an overall system for segmenting video sequences according to the present invention.

Fig. 2A, 2B is a flow chart view of a motion segmentation module for the system of Fig. 1 according to the present invention.

Fig. 3 is an illustrative view of the application of the motion segmentation module of Fig. 2 as applied to a video sequence according to the present invention.

Fig. 4 is an illustrative view of a contour model according to the present invention.

Fig. 5 is an illustrative view of how a balloon term in a binary contour model pushes/pulls contour nodes according to the present invention.

Fig. 6 is a flow chart view of a binary contour model for the system of Fig. 1 according to the present invention.

Fig. 7 is an illustrative view of a video sequence where the contour is shrunk to an object by the binary contour model according to the present invention.

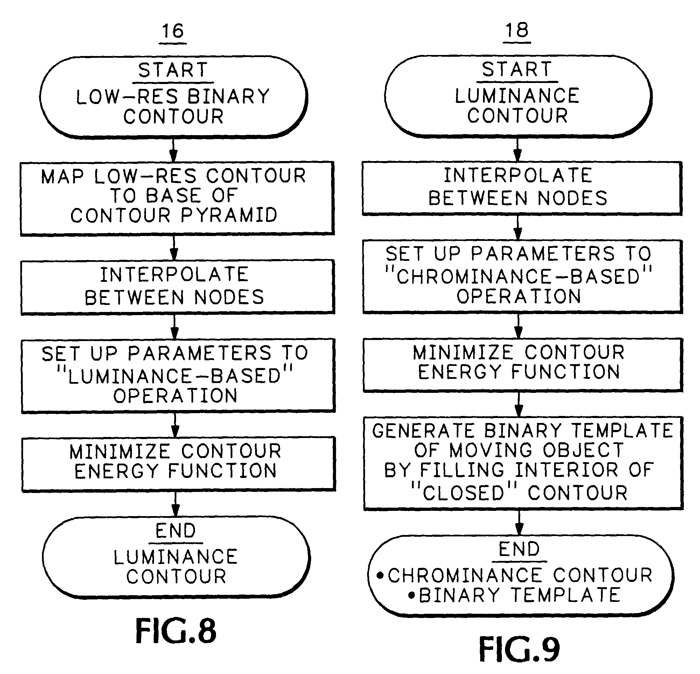

Fig. 8 is a flow chart view of a luminance contour module for the system of Fig. 1 according to the present invention.

Fig. 9 is a flow chart view of a chrominance contour model for the system of Fig. 1 according to the present invention.

Fig. 10 are illustrative views of the application of the luminance and chrominance contour modules to a video sequence according to the present invention.

Fig. 11 is a flow chart view of the minimization of a contour's energy function according to the present invention.

DETAILED DESCRIPTION OF THE INVENTION

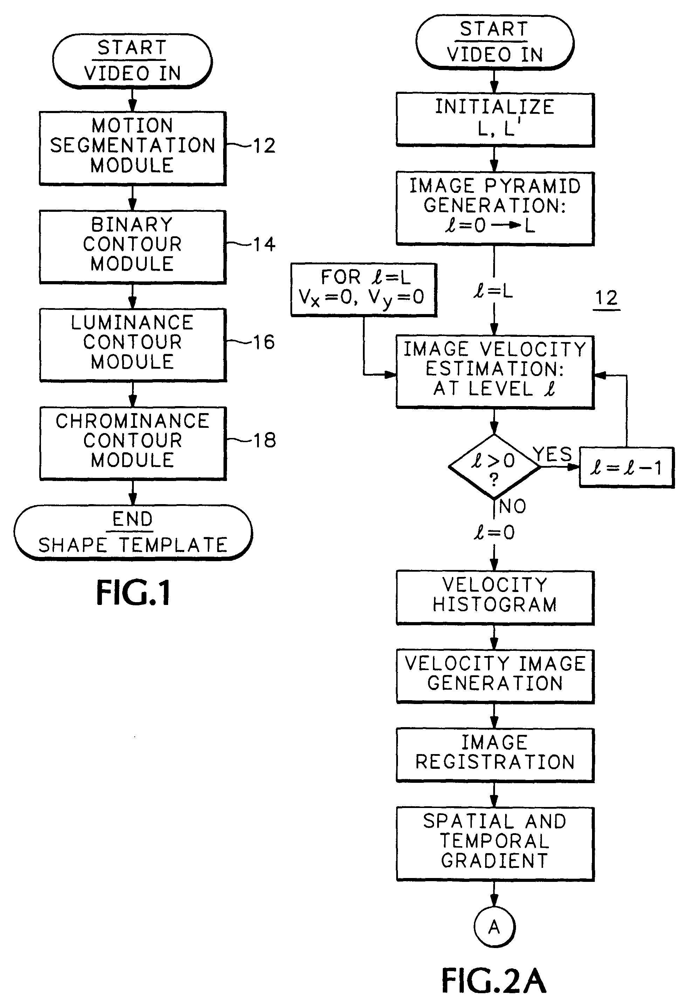

Referring now to Fig. 1 an automatic system for segmenting objects in a video sequence in terms of its region and boundary properties is shown. The system has four inter-dependent modules: (i) a motion segmentation module **12**; (ii) a binary contour module **14**; (iii) a luminance-based contour module **16**; and (iv) a chrominance-based contour module **18**. Each module is described in detail below.

Motion Segmentation Module

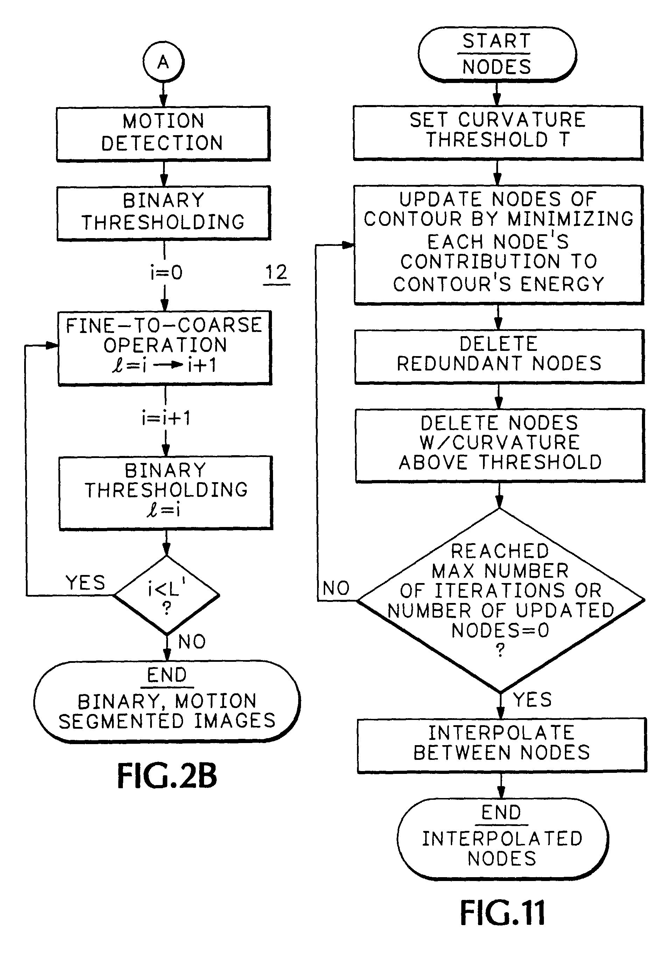

This module, as shown in Figs. 2A and 2B, segments objects based on their motion information. The following operations are performed in sequence:

1. **Pyramid Generation.** For each image of the video sequence a dyadic Gaussian pyramid is generated in a fine-to-coarse way starting with the image of highest resolution and successively producing images with smaller resolution from the preceding image. The total number of levels, described by the parameter **L**, is defined by a user and depends upon image properties.

2. **Image Velocity Computation**. This is realized in a coarse-to-fine way. At the coarsest level the image velocity is initialized to be equal to zero at all pixels. This is used by a velocity estimation method, such as using a block matching algorithm, to compute the velocity of MxN pixels at sub-pixel accuracy which describe the velocity of macroblocks into which each image is tessellated. The result of this is propagated to the next level by truncating it to its closest integer and multiplying it by 2 for use as an initial guess for the image velocity at the next level. This process is repeated until reaching the base pyramid level ($l$=0). Each pixel inside the MxN neighborhood has the same velocity.

3. **Velocity Histogramming**. A velocity histogram is produced in the velocity space that is spanned by the two orthogonal image velocity components. The mode of the histogram -- the highest peak -- is chosen as the velocity of the image background. The image background, which includes the area of the image not associated with independently moving objects, is assumed to contain at least X% of the total number of pixels in the image, where X may be 80%, for example.

4. **Image Registration**. Successive images are registered (aligned) according to the velocity for the image background determined above.

5. **Gradient Computation**. Successive registered images are used to compute the spatial and temporal image gradients. These are implemented in terms of averaged differences in image intensity inside 2x2x2 cubes whose vertices are the pixel positions of the two registered images. Then a weighted average of each image gradient is computed inside spatial neighborhoods, such as 3x3, for each of the three image gradient images (X and Y spatial and T temporal).

6. **Motion Segmentation**. Independently moving objects relative to the image background are segmented by the successive use of a motion detection measure and a binary threshold.

6.1 **Motion Detection**. The motion detection measure combines spatial and temporal image gradients at each pixel as given by $M(x,y,t)^{(p,q)}= |\partial I(x,y,t)/\partial t|^p*|\nabla I[x,y,t]|^p/(|\nabla I(x,y,t)|^q+C)$, where $\partial I[x,y,t)/\partial t$ and $\nabla I(x,y,t)$ are the temporal and spatial image gradients at pixel (x,y) and at instant t. Also p,q are positive rational numbers and C is a constant to avoid numerical instabilities. In particular when C=0, p=0 and q=1, M corresponds to the normal image velocity component to spatial image gradient points or contours. For the present application C=5, p=1/2 and q=1 may be used.

6.2 **Binary Thresholding**. The binary thresholding generates a motion segmentation image that is equal to 255 (white) at regions corresponding to the moving object(s) and 0 (black) otherwise corresponding to the image background image.

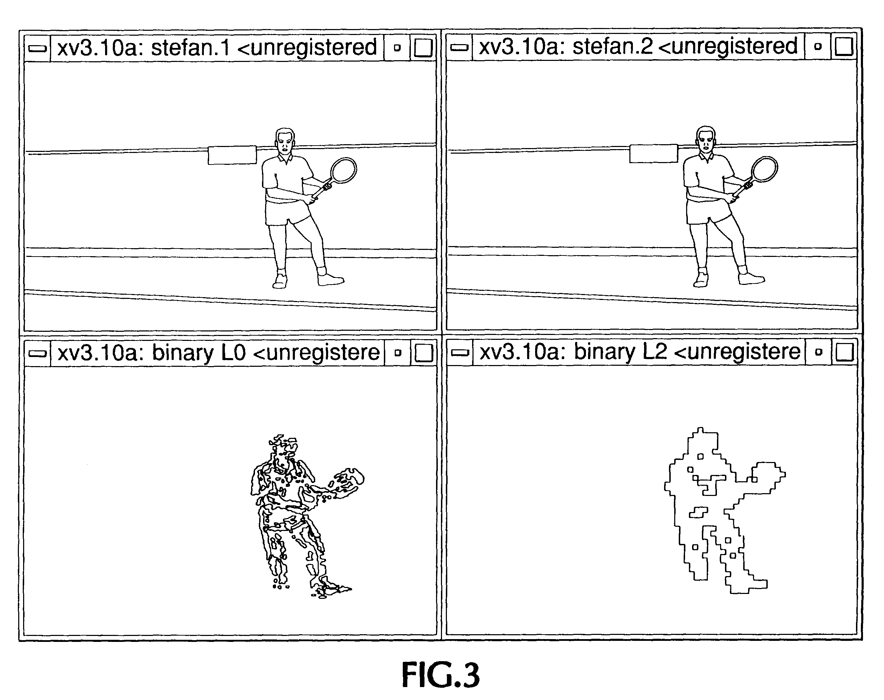

The result of applying the motion segmentation module **12** to images of natural video sequences is shown in Fig. 3. The upper images are pairs of successive, raw natural video images that are input to the motion segmentation module, the lower left image is the binary motion segmentation image at $l$=0, and the lower right image corresponds to the binary image at $l$=2. The latter image is the output from the motion segmentation module **12** and the input to the binary contour module **14**.

Binary Contour Module

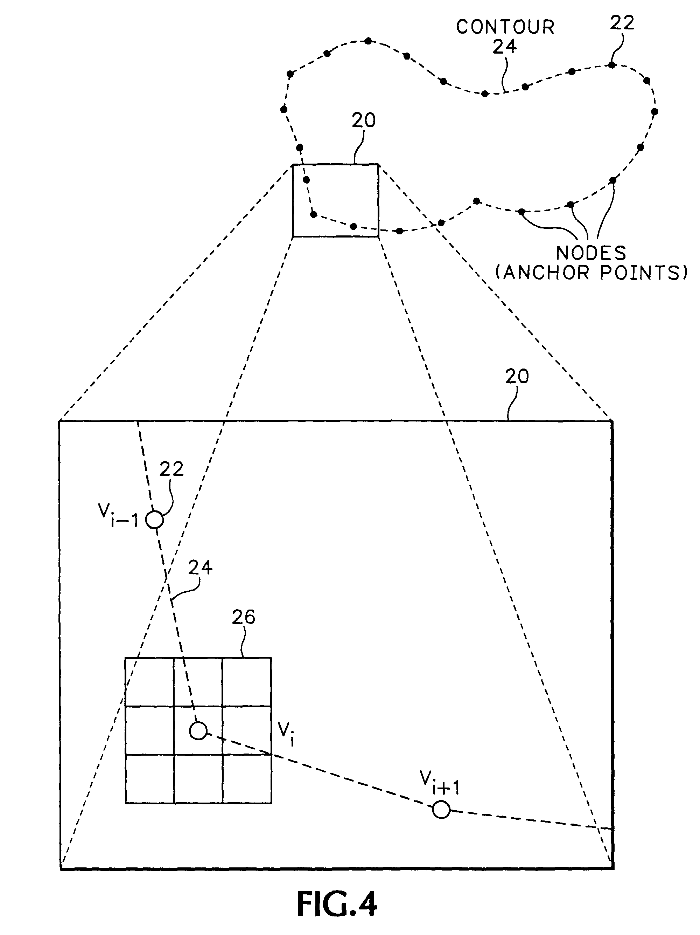

The binary contour module **14** fits a contour, as shown in Fig. 4, to a binary image obtained from the motion segmentation module. A macroblock **20** of MxN pixels is shown including some of the nodes **22** that define a closed contour **24**. A neighborhood **26** is shown around one of the nodes **22**, as is explained below. The resulting contour **24** describes the approximate shape of an independently moving object. Each closed contour **24** is described by a total set of N nodes $\mathbf{V_i}$ **22**. This module describes the evolution of a single contour **24** , i.e., its nodes **22**, as it fits to the object previously segmented by the motion segmentation module **12**, the evolution being described by the dynamics of the contour nodes, and is implemented by minimizing an energy cost function containing the following terms:

1. **Continuity Term**. This enforces a tension along the contour nodes **22** and is mathematically described by the square of the difference in the position of adjacent nodes, i.e., the square of the distance between them:

$$E_{continuity} = \sum_{i=1}^{N} | V_i - V_{i-1} |^2.$$

2. **Rigidity Term**. This contrains bending across the contour **24**. It is directly proportional to the contour curvature. Mathematically it is given by the square of the second difference in position of adjacent nodes **22**:

$$E_{rigidity} = \sum_{i=1}^{N} | V_{i-1} - 2V_i + V_{i+1} |^2.$$

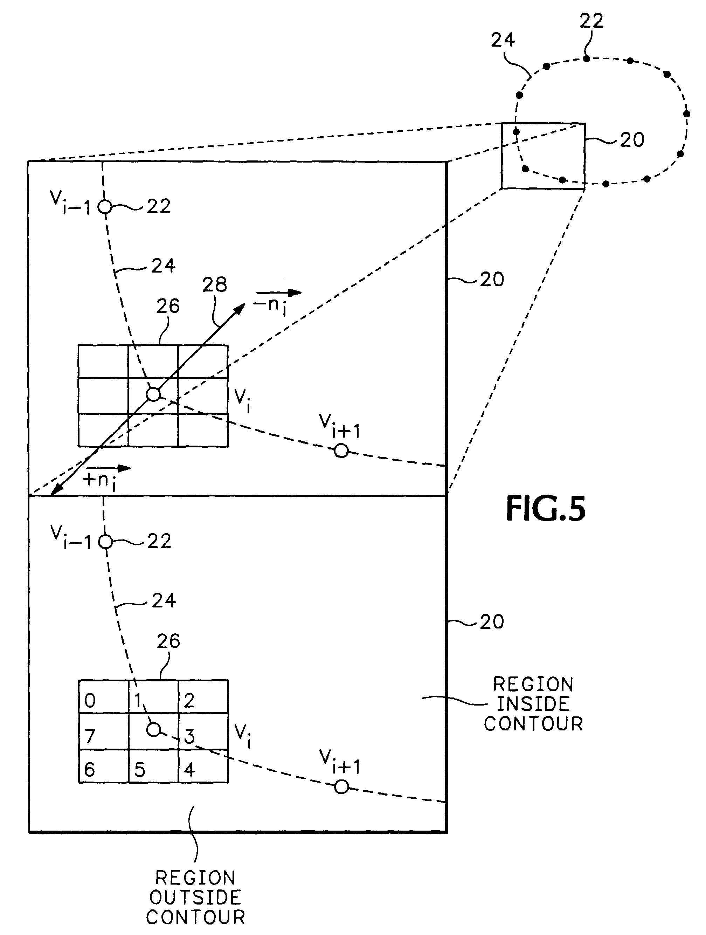

3. **Balloon Term**. This pushes/pulls all contour nodes 22 in the direction of a normal **28** to the contour **24**, as shown in Fig. 5. For a node $V_i$ and its neighbors, such as defined in a 3x3 square **26**, the balloon term pushes/pulls $V_i$ to one of its neighbors that lies closest in the direction of the normal **28**. Mathematically it's given by:

$$E_{balloon} = -\sum_{i=1}^{N} \partial_{ini},$$

where $\partial_{ini}$ is a Kronecker delta between the target contour node $V_i$ and the element of the neighborhood **26** that is closest to the normal direction of the contour $n_i$.

Taken together the total energy function is equal to:

$$E_{contour} = \alpha E_{continuity} + \beta E_{rigidity} + \gamma E_{balloon}$$

where $\alpha$, $\beta$ and $\gamma$ correspond to the weighting constants.

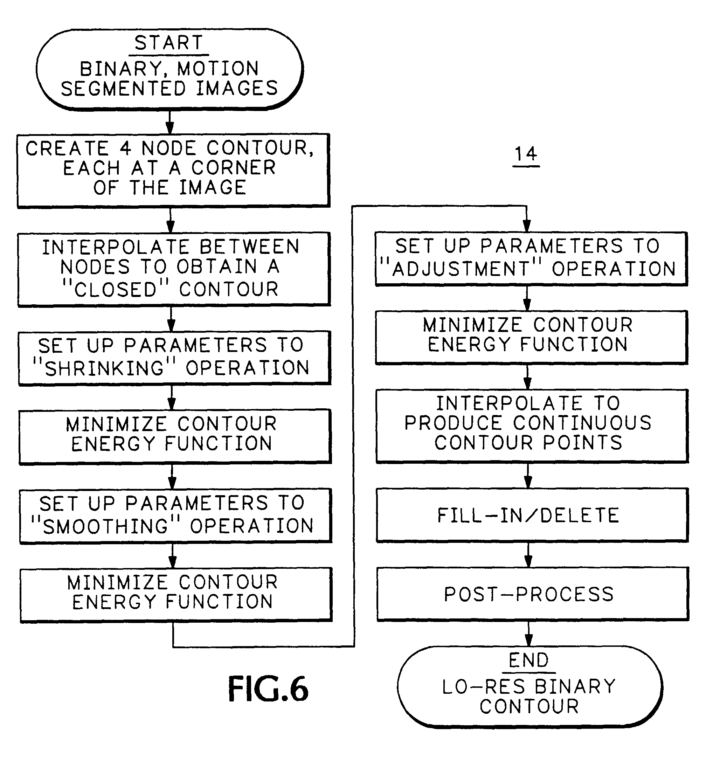

The binary contour module **14** is implemented as shown in Fig. 6 by minimizing a total energy that is equal to the weighted sum of the continuity, rigidity and balloon terms. The three weighting parameters multiplying these terms are fixed according to the following equations:

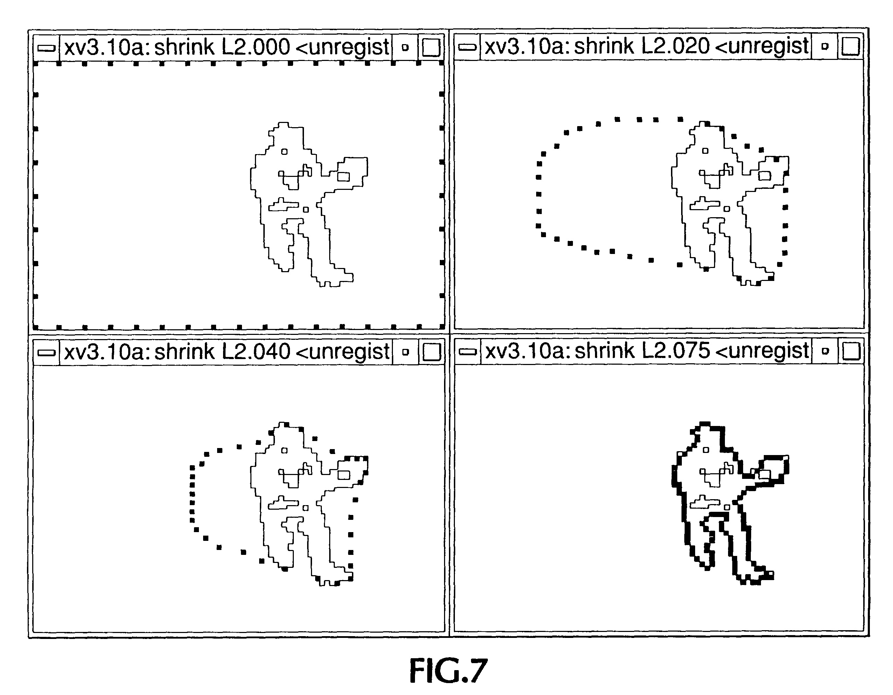

1. **Shrinking**. Typically for this operation $\alpha$=10, $\beta$=0.1 and $\gamma$=5. This operation poses very little weight for the rigidity term, while enforcing a very high force for the continuity term. The goal of this operation is to shrink the contour **24**, which is initialized as a rectangular contour along the image boundaries, to approximately the object position, as shown in Fig. 7.
2. **Smoothing**. The typical choice for this case is $\alpha$=10, $\beta$=2 and $\gamma$=5. This operation increases the weight of the rigidity term in order to smooth out the contour **24** to delete sharp corners.
3. **Adjustment**. The typical choice is $\alpha$=10, $\beta$=2 and $\gamma$=10 (very high). This operation makes the final adjustment of the contour **24**, especially for convex areas whose boundaries exhibit great curvature variation.

Each of these operations is supervised by a **fitting operation**. This operation adjusts the contour node positions such that all of them stay on the boundary between the object interior (white) and its surroundings (black). In particular nodes **22** that move initially inside the object due to the balloon term are moved back to the object's boundaries. Also once a node **22** reaches the boundary position, it is nailed to it and not allowed to move any more.

Following these operations the contour nodes **22** are interpolated, such as by an arbitrary polynomial interpolation (splines) -- cubic spline interpolation. The resulting contour **24** is described by a continuous number of points. The interior of these points describe the object's region. For selecting this region a shape template is generated from the interpolated contour **24** by filling in the interior of the contour with white. **Fill-in/ Deletion**. The purpose here is to fill in "open regions" surrounded by interior portions of the object to be segmented and to delete "outliers" corresponding to isolated parts in the image that are not part of the object. For each pixel in the binary image (0 for the static background and 255 for the moving foreground object) the intensity is checked together with the intensity of all pixels in a small neighborhood (2w where w is a positive integer) to see if all the pixels have intensities of 255 -- if YES, then the pixels inside a square neighborhood of size 2w+e, where e is a positive integer are filled (since e>0 this operation does not increase the number of pixels around the target pixel which have the requisite intensity); if NO, then the target pixel is set to zero, which has the effect of deleting isolated pixels with 255 intensity values.

**Binary Image Post-Processing**. Since the motion processing tends to "bloat" the foreground object, in that the combination of pixels from two successive images for the object produce an object with a larger outline than actual, it is desired to make the binary image have a shape and outline that resembles as much as possible the actual shape by obtaining the binary images from respective image pairs $I_{k-1}$, $I_k$ and $I_k$, $I_{k+1}$ and combining the resulting binary images to obtain the intersection binary image associated with image $I_k$.

The binary contour module **14** is usually applied to a binary image of reduced size, as generated through a cascade of a fine-to-coarse pyramid transformations on the binary motion segmentation image obtained from the images with the highest spatial resolution (pyramid base) followed by a binary thresholding as displayed in the final loop of Fig. 2. The reason for using these reduced size binary images is that they are filled in versions of the larger images and therefore have less segmentation artifacts, such as holes, and allow for a significant reduction in contour fitting processing time.

Luminance-Based Contour Module

The luminance-based contour module **16** is applied to the gray-level images from the binary contour module **14** as an initial guess, or position. Similar to the binary contour module **14** the minimization of an energy cost function, given by the sum of the three terms used in the binary contour module, is realized with a gradient term. The gradient term is equal to the negative square of the spatial image intensity gradient:

$$E_{gradient} = -\sum_{i=1}^{N} |\nabla I_i(x,y,t)|.$$

This term operates on the luminance image component. This fourth term in the energy function attracts the contour **24** to the positions of the image boundaries (edges).

Chrominance-Based Contour Module

The chrominance-based contour module **18** combines the luminance-based contour with chrominance image components. In addition to the fourth term -- the gradient term -- the energy function now contains two additional terms. Each of these terms is given by the sum of the squares of the difference between the chrominance image intensity at each pixel and the mean intensity inside the contour **24**:

$$E_{chrominance} = \Sigma_{i,j}(C[i][j]-\mu)^2,$$

where C[i][j] is the chrominance image intensity values for the Cr and Cb chrominance components and

$$\mu = \Sigma_{i,j}C[i][j]/N_p,$$

where $N_p$ equals the total number of pixels inside the contour.

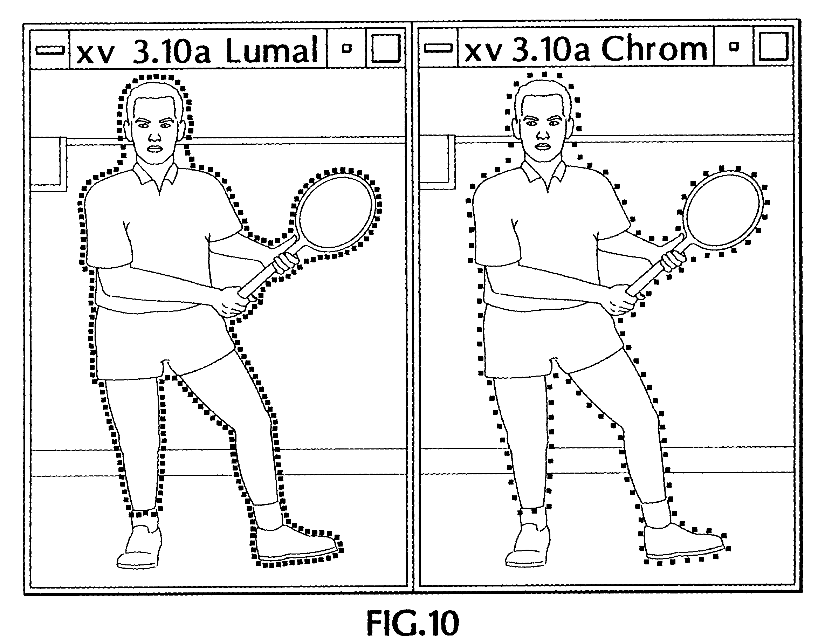

The initial guess for this module is given by the output from the luminance-based contour module **16**, and it performs a final adjustment of the contour position taking into account color information from the Cr and Cb image chrominance components which contain low-frequency spatial image information. Fig. 10 illustrates the outputs from the luminance and chrominance contour modules **16, 18** respectively.

As a final operation an object shape template based on the resulting interpolated contour **24** is generated analogously to the shape template described for the binary image. The closed object contour, obtained by interpolating the nodes, is supplemented with a uniform intensity mask, say with values 255, by filling in the interior. This translates a contour description into an alpha-map (bitmap) description, converts other closed shapes defined by mathematical formulae, such as circles, rectangles and the like, into their bitmap representations, and identifies a particular "blob" in which a particular point belongs where there are a large number of contours in an image. The procedure starts by selecting a "seed" point internal to the contour, which initially becomes the "current pixel." The pixels in an output bitmap are initially set to 0. If the current pixel is within the image, has not been "visited" before, and is within the closed contour, set the intensity value to 255 in the output bitmap at the current pixel location. Visit the neighbors of the current pixel -- if the pixel has been visited before, the value in the output bitmap is already 255. Each neighbor becomes the new current pixel in turn and is tested to determine whether it is within the closed contour. This iterative process continues until all of the pixels within the closed contour have been visited and the contour mask exists in the output bitmap.

A typical energy minimization function is shown in Fig. 11. The contour nodes **22** are input to the minimization function, where a curvature threshold parameter **T** is set. The nodes **22** are updated by minimizing each node's contribution to the energy of the contour **24**. Redundant nodes are then deleted, as well as nodes with a curvature that exceeds the threshold **T**. This is repeated until a specified maximum number of iterations is reached or the number of updated nodes reaches zero. An interpolation algorithm, such as spline interpolation, is then applied to the remaining nodes to produce the interpolated nodes that define the contour.

Thus the present invention provides for segmenting of video sequences based on joint region and contour information by performing a motion segmentation operation followed by a contour refinement operation using binary, luminance and chrominance operators to produce a shape template that defines an object segmented from the video sequence for each image of the sequence.

## Claims

1. A method of segmenting objects from images in a video sequence comprising the steps of:

   separating an object from the video sequence for each image based upon motion; and
   fitting a contour to the object to produce a shape template for each image in the video sequence.

2. The method as recited in claim 1 wherein the separating step comprises the steps of:

   determining via a velocity histogram a background portion of the image;
   registering successive images in the video sequence according to the velocity of the background portion;
   computing spatial and temporal gradients from successive registered images;
   combining the spatial and temporal gradients to produce a motion detection measure; and
   binary thresholding the motion detection measure to produce a binary motion segmentation image having one value at regions corresponding to moving objects and having the opposite value at regions corresponding to the background portion.

3. The method as recited in claim 2 wherein the determining step comprises the steps of:

   generating a dyadic Gaussian pyramid in a fine-to-coarse way from the image to produce images of successively smaller resolution from the preceding image;
   computing image velocity in a coarse-to-fine way using a block matching algorithm; and
   histogramming the velocity for each block of the image such that the mode of the histogram is the velocity of the background portion.

4. The method as recited in claim 1 wherein the fitting step comprises the steps of:

   approximating from a binary image corresponding to the object a shape for the object;
   using luminance data to attract the shape to positions of the object boundaries to produce a luminance based contour for the object; and
   finally adjusting the luminance based contour as a function of image chrominance data to produce the shape template.

5. The method as recited in claim 4 wherein the approximating step comprises the steps of:

   generating for nodes defining a contour about the object a binary term, a rigidity term and a balloon term to produce an energy function;
   applying weighting parameters to each term to first shrink the nodes of the contour to approximate the position of the object within the image, to second smooth the contour to delete sharp corners, and then to adjust the nodes of the contour so that they stay on the boundary between the object interior and its surroundings, all by minimizing the energy function;
   interpolating the nodes to produce the contour described by a continuous number of points; and
   selecting the shape for the object by filling the interior of the contour with a specified value.

6. The method as recited in claim 5 wherein the using step comprises the step of generating a luminance gradient term from the luminance data which is added to the energy function to produce the luminance based contour.

7. The method as recited in claim 6 wherein the adjusting step comprises the steps of:

   generating a chrominance energy function which is added to the energy function for the luminance based contour to a chrominance based contour; and
   forming the shape template by filling in the interior region of the chrominance based contour.

**FIG.1**

**FIG.2A**

7

(A)

MOTION
DETECTION

BINARY
THRESHOLDING

i=0                12

FINE—TO—COARSE
OPERATION
$\ell = i \longrightarrow i+1$

i=i+1

BINARY
THRESHOLDING
$\ell = i$

YES    $i < L'$
?

NO

END
BINARY, MOTION
SEGMENTED IMAGES

**FIG.2B**

START
NODES

SET CURVATURE
THRESHOLD T

UPDATE NODES OF
CONTOUR BY MINIMIZING
EACH NODE'S
CONTRIBUTION TO
CONTOUR'S ENERGY

DELETE
REDUNDANT NODES

DELETE NODES
W/CURVATURE
ABOVE THRESHOLD

NO    REACHED
MAX NUMBER
OF ITERATIONS OR
NUMBER OF UPDATED
NODES=0
?

YES

INTERPOLATE
BETWEEN NODES

END
INTERPOLATED
NODES

**FIG.11**

8

FIG.3

CONTOUR
24

22

20

NODES
(ANCHOR POINTS)

20

$V_{i-1}$

22

24

26

$V_i$

$V_{i+1}$

FIG.4

FIG.5

REGION
INSIDE
CONTOUR

REGION
OUTSIDE
CONTOUR

```
          START
       BINARY, MOTION
     SEGMENTED IMAGES
            │
            ▼
  CREATE 4 NODE CONTOUR,
     EACH AT A CORNER                    14
       OF THE IMAGE
            │
            ▼
  INTERPOLATE BETWEEN          SET UP PARAMETERS TO
   NODES TO OBTAIN A          "ADJUSTMENT" OPERATION
    "CLOSED" CONTOUR
            │                            │
            ▼                            ▼
  SET UP PARAMETERS TO          MINIMIZE CONTOUR
 "SHRINKING" OPERATION          ENERGY FUNCTION
            │                            │
            ▼                            ▼
   MINIMIZE CONTOUR             INTERPOLATE TO
   ENERGY FUNCTION          PRODUCE CONTINUOUS
                              CONTOUR POINTS
            │                            │
            ▼                            ▼
  SET UP PARAMETERS TO
 "SMOOTHING" OPERATION          FILL-IN/DELETE
            │                            │
            ▼                            ▼
   MINIMIZE CONTOUR
   ENERGY FUNCTION               POST-PROCESS
                                         │
                                         ▼
                                        END
                                  LO-RES BINARY
                                     CONTOUR
```

**FIG.6**

FIG.7

## 16

```
START
LOW-RES BINARY
CONTOUR
```
↓
```
MAP LOW-RES CONTOUR
TO BASE OF
CONTOUR PYRAMID
```
↓
```
INTERPOLATE
BETWEEN NODES
```
↓
```
SET UP PARAMETERS TO
"LUMINANCE-BASED"
OPERATION
```
↓
```
MINIMIZE CONTOUR
ENERGY FUNCTION
```
↓
```
END
LUMINANCE
CONTOUR
```

**FIG.8**

## 18

```
START
LUMINANCE
CONTOUR
```
↓
```
INTERPOLATE
BETWEEN NODES
```
↓
```
SET UP PARAMETERS TO
"CHROMINANCE-BASED"
OPERATION
```
↓
```
MINIMIZE CONTOUR
ENERGY FUNCTION
```
↓
```
GENERATE BINARY TEMPLATE
OF MOVING OBJECT
BY FILLING INTERIOR OF
"CLOSED" CONTOUR
```
↓
```
END
•CHROMINANCE CONTOUR
•BINARY TEMPLATE
```

**FIG.9**

**FIG.10**

EP 0 959 625 A2